# EUROPÄISCHE PATENTSCHRIFT

(11) **EP 2 983 930 B1**
(45) Veröffentlichungstag und Bekanntmachung des Hinweises auf die Patenterteilung: **24.10.2018**
(21) Anmeldenummer: 14718529.2
(22) Anmeldetag: 03.04.2014
(51) Int. Cl.: B60K 5/12, B62D 21/15

(54) **STRUKTURELEMENT IM VORDEREN BEREICH EINES KRAFTFAHRZEUGES**
STRUCTURAL ELEMENT IN THE FRONT REGION OF A MOTOR VEHICLE
ÉLÉMENT STRUCTURAL DANS LA ZONE AVANT D'UNE AUTOMOBILE

(30) Priorität: 09.04.2013 DE 102013206250
(43) Veröffentlichungstag der Anmeldung: 17.02.2016
(73) Patentinhaber: Bayerische Motoren Werke Aktiengesellschaft, 80809 München (DE)
(72) Erfinder: MÜHLHAUSEN, Mark, 85457 Wörth (DE); BEHRENDT, Franz-Peter, 80469 München (DE); RITSCHEL, Thomas, 80687 München (DE); LUKASZEWICZ, Dirk, 80805 München (DE); GOLDSCHMIDT, Sebastian, 80939 München (DE)
(86) Internationale Anmeldenummer: PCT/EP2014/056660
(87) Internationale Veröffentlichungsnummer: WO 2014/166800

(56) Entgegenhaltungen:
- DE-A1- 2 241 651
- DE-A1- 4 318 260
- DE-A1- 10 257 262
- DE-A1-102006 058 604
- DE-U1- 29 907 513
- GB-A- 2 367 270
- US-A- 4 518 058

## Beschreibung

Die vorliegende Erfindung betrifft ein Strukturelement im vorderen Bereich eines Kraftfahrzeuges.

Strukturelemente im vorderen Bereich eines Kraftfahrzeuges sind hinlänglich bekannt. Sie dienen zur Lasteinleitung des Vorderwagens des Kraftfahrzeuges in dessen Stirnwand und sind beispielsweise als Vorderwagenstrukturen und Stirnwandstrukturen in Blech-Schalenbauweise ausgebildet, bei denen die Lasten des Motorträgers über eine Verzweigung aus Boden-Längsträger und Anschlussträger in die Bodenstruktur, die A-Säule und den Tunnel eingeleitet werden. Ferner sind Konstruktionen aus Aluminium bekannt, bei denen der Motorträger als Profilbauteil seine Last über angeschweißte und angenietete Profile sowie Gussknoten in die Boden- und Seitenrahmenstruktur überleitet.

Nachteilig an den bekannten Konzepten ist das begrenzte Leichtbaupotential der metallischen Materialien und die Probleme hinsichtlich Wärmedehnung und Korrosion, die sich bei der Kombination aus Metallstrukturen mit CFK-Strukturen ergeben.

Aus der DE 10 2006 058 604 A1 ist bereits eine Crashbox bekannt, die zwischen einem Stoßfängerquerträger und Längsträgern eines Kraftfahrzeuges angeordnet ist. Die bekannte Crashbox weist ein gehäuseartiges Deformationsprofil aus einem Metallblech auf, das bei einer axialen Stauchung Falten bildet. Die Crashbox ist somit für eine lineare Belastung ausgelegt und als ein statisches Trägersystem geeignet.

Aus der DE 299 07 513 U1 ist ein als Deformationsdämpfer ausgebildeter Pralldämpfer für Kraftfahrzeuge bekannt. Der bekannte Pralldämpfer dient zur Abstützung eines Stoßfängers am Chassis eines Kraftfahrzeuges, beispielsweise an den Längsträgern.

Aus der GB 2 367 270 A ist ein Strukturelement im vorderen Bereich eines Kraftfahrzeuges bekannt, das zwischen einem Stoßfängerquerträger und einer Stirnwand des Kraftfahrzeuges angeordnet ist. Das bekannte Strukturelement weist ein verformbares Crash-Strukturmodul auf, das aus einer Vielzahl von Crash-Schienen besteht. Die Crash-Schienen bestehen aus einem Verbundmaterial. Das Verbundmaterial weist Fasern auf, die in einem Kunststoff angeordnet sind. Das Crash-Strukturmodul stützt den Stoßfängerquerträger bzw. den Stoßfänger ab. Im Falle einer Fahrzeugkollision verformen sich die Crash-Schienen, so dass die Kollisionsenergie absorbiert wird.

Es ist Aufgabe der vorliegenden Erfindung, die vorgenannten Probleme zu beheben.

Diese Aufgabe wird erfindungsgemäß gelöst durch ein Strukturelement im vorderen Bereich eines Kraftfahrzeuges, das zwischen einem Motorträger und einer Stirnwand des Kraftfahrzeuges angeordnet ist, und das ein Deformationselement aufweist, welches über eine vordere Einspannung am Motorträger und eine hintere Einspannung an der Stirnwand befestigt ist, wobei die vordere Einspannung über eine obere Schale und eine untere Schale mit der Stirnwand derart verbunden ist, dass die beiden Schalen miteinander eine geschlossene, trichterförmige Struktur bilden.

Gegenüber metallischen Strukturkonzepten und Metall-CFK-Mischbauweisen ergibt sich infolge der erfindungsgemäßen Ausgestaltung ein höheres Leichtbaupotential. Gegenüber einer reinen Schalenbauweise in CFK-Bauweise ist die Energieaufnahme beim Crash erheblich gesteigert. Das Deformationsverhalten ist durch die Auslegung des Deformationselementes gut steuerbar und mit geringem Aufwand an unterschiedliche Anforderungen durch unterschiedliche Crashgewichte bei Fahrzeugvarianten einer Baureihe anpassbar.

Die Unteransprüche beinhalten vorteilhafte Weiterbildungen und Ausgestaltungen der Erfindung.

Gemäß einer vorteilhaften Weiterbildung besteht das Deformationselement aus einem Faserverbundkunststoff.

Vorteilhafterweise ist die hintere Einspannung über lösbare Befestigungselemente mit der Stirnwand verbunden, insbes. verschraubt und stützt sich an Lastverteilerplatten ab, welche in die Stirnwand integriert sind.

Die Stirnwand besteht vorteilhafterweise aus einem Faserverbundmaterial mit einem Schaumkern.

Gemäß einer bevorzugten Weiterbildung sind die Lastverteilerplatten zusammen mit den Befestigungselementen für die hintere Einspannung des Deformationselementes in den Schaumkern der Stirnwand integriert.

Die von den Schalen gebildete trichterförmige Struktur ist vorteilhafterweise derart mit der Stirnwand verbunden, dass sie den Motorträger zumindest in horizontaler und vertikaler Richtung gegenüber der Stirnwand abstützt.

Gemäß einer vorteilhaften Ausgestaltung sind das Deformationselement und die vordere Einspannung über ein leicht lösbares Befestigungselement an dem Motorträger befestigt. Infolge dieser Ausgestaltung kann im Reparaturfall nach einer Beschädigung des Motorträgers dieser leicht und mit vertretbarem Aufwand gewechselt werden.

Um eine Beschädigung des Deformationselementes gut von außen erkennen zu können, ist gemäß einer bevorzugten Weiterbildung zumindest eine der beiden Schalen in zumindest einem Teilbereich derart ausgelegt, dass bei einer Belastung, die zu einer Beschädigung des Deformationselementes führt, eine sichtbare Veränderung an der Schale auftritt.

Erfindungsgemäß wird somit der Übergang vom Motorträger in die Stirnwand als weitgehend sortenreine CFK-Konstruktion ausgeführt. Dabei wird die Steifigkeit des vorderen Bereichs des Kraftfahrzeuges durch eine trichterförmige Konstruktion erreicht, welche die Verbindung zwischen dem Motorträger und der Stirnwand herstellt. Die Crashlasten werden über das Deformationselement in die Stirnwand eingeleitet, die im Anbindungsbereich als Sandwich mit einer integrierten metallischen Lastverteilerplatte ausgeführt ist. In Kombination der trichterförmigen Schalenkonstruktion mit dem innenliegenden Deformationselement können alle auftretenden Kräfte und Momente last- und faserverbundgerecht in die mit einer geeigneten Verstärkung versehenen Stirnwand eingeleitet werden.

Weitere Einzelheiten, Merkmale und Vorteile der Erfindung ergeben sich aus der nachfolgenden Beschreibung anhand der Zeichnungen. Es zeigen:

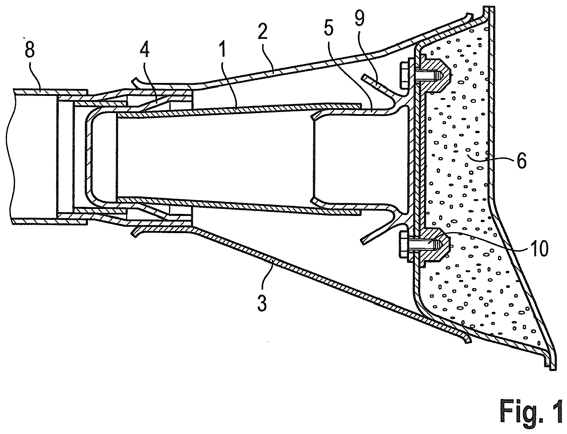

- Figur 1: einen vertikalen Längsschnitt durch das erfindungsgemäße Strukturelement, und

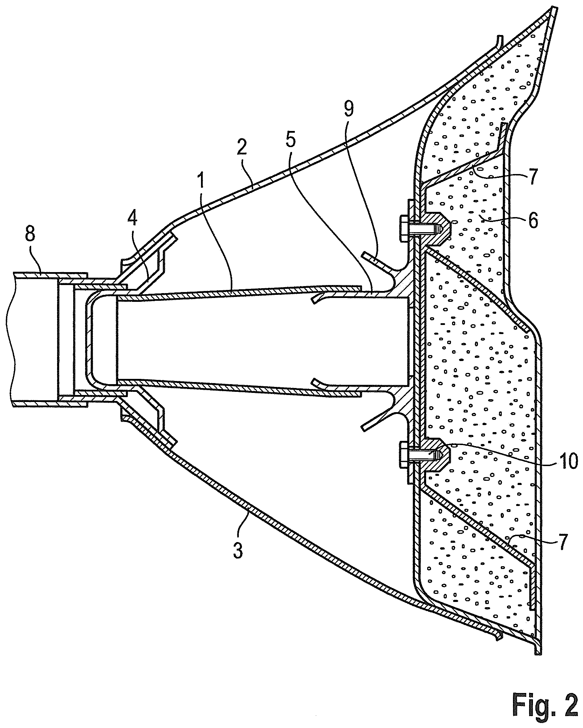

- Figur 2: einen horizontalen Längsschnitt durch das erfindungsgemäße Strukturelement.

In den Figuren sind nur die hier interessierenden Teile des erfindungsgemäßen Strukturelementes dargestellt, alle übrigen Elemente sind der Übersichtlichkeit halber weggelassen.

Im vorderen Bereich eines Kraftfahrzeuges ist ein Strukturelement angeordnet, das als Lasteinleitung dient. Das Strukturelement, welches zwischen einem Motorträger 8 und einer Stirnwand 6 des Kraftfahrzeuges angeordnet ist, weist ein Deformationselement 1 auf, welches über eine vordere Einspannung 4 an dem Motorträger 8 und eine hintere Einspannung 5 an der Stirnwand 6 befestigt ist.

Die Stirnwand 6 besteht vorteilhafterweise aus einem Faserverbundmaterial mit einem Schaumkern.

Die vordere Einspannung 4 ist über eine obere Schale 2 und eine untere Schale 3 mit der Stirnwand 6 derart verbunden, dass die beiden Schalen 2, 3 miteinander eine geschlossene, trichterförmige Struktur bilden.

Das Deformationselement 1, das innerhalb der beiden Schalen 2, 3 angeordnet ist, besteht vorzugsweise aus einem Faserverbundkunststoff und weist eine im Wesentlichen rohrförmige Gestalt auf.

Die vordere Einspannung 4, die am Motorträger 8 befestigt ist, ist als topfförmige Hülse ausgebildet und umgreift das Deformationselement 1 von außen, während die hintere Einspannung 5, die an der Stirnwand 6 angeordnet ist, als rohrförmige Hülse ausgebildet ist und in das rohrförmige Deformationselement 1 hineinragt.

Die hintere Einspannung 5 ist mit einem Anschlagkragen 9 versehen, der eine Verschiebung des Deformationselementes 1 in Richtung auf die Stirnwand 6 begrenzt. Weiterhin ist die hintere Einspannung 5 über lösbare Befestigungselemente 10 mit der Stirnwand 6 verbunden, insbes. verschraubt und stützt sich an Lastverteilerplatten 7 ab, welche in die Stirnwand 6 bzw. in das mit einem Schaumkern versehene Faserverbundmaterial integriert sind.

Die von den Schalen 2, 3 gebildete trichterförmige Struktur ist derart mit der Stirnwand 6 verbunden, dass sie den Motorträger 8 zumindest in horizontaler und vertikaler Richtung gegenüber der Stirnwand 6 abstützt.

Die vordere Einspannung 4, über die das Deformationselement 1 mit dem Motorträger 8 verbunden ist und an dem auch die Schalen 2, 3 angebunden sind, kann mit geringem Aufwand von dem Motorträger 8 getrennt werden, so dass im Reparaturfall nach einer Beschädigung des Motorträgers 8 derselbe mit vertretbarem Aufwand gewechselt werden kann.

Darüber hinaus ist zumindest eine der beiden Schalen 2, 3 in zumindest einem Teilbereich derart ausgelegt, dass bei einer Belastung, die zu einer Beschädigung des Deformationselementes 1 führt, eine sichtbare Veränderung an der Schale 2, 3 auftritt.

Gegenstand der Erfindung ist somit ein Konzept für die Lasteinleitung des Vorderwagens eines Kraftfahrzeuges in die Stirnwand 6 desselben, bei der der Motorträger 8 über eine trichterförmige Schalenkonstruktion, bestehend aus den Schalen 2, 3, an die Stirnwand 6 angebunden ist und innerhalb der beiden Schalen 2, 3 ein Deformationselement 1 den Motorträger 8 mit der Stirnwand 6 verbindet. Die Stirnwand 6 ist im Anbindungsbereich als Sandwichkonstruktion mit zwei Decklagen aus einem Faserverbundkunststoff und in den Schaumkern integrierten Lastverteilerplatten 7 ausgeführt. Diese Lastverteilerplatten 7 weisen an der Vorderseite Befestigungselemente 10 für die Anbindung des Deformationselementes 1 auf, während sich die Lastverteilerplatten 7 in Form eines Winkels an der hinteren Schale der Stirnwand 6 abstützen.

Grundsätzlich ist anzumerken, dass die Deformation des beschriebenen Deformationselementes 1 erst nach der Deformation des räumlich vorgelagerten Motorträgers erfolgen soll.

Die vorhergehende Beschreibung der vorliegenden Erfindung dient nur zu illustrativen Zwecken und nicht zum Zwecke der Beschränkung der Erfindung.

### Bezugszeichenliste

- 1: Deformationselement
- 2: obere Schale
- 3: untere Schale
- 4: vordere Einspannung
- 5: hintere Einspannung
- 6: Stirnwand
- 7: Lastverteilerplatte
- 8: Motorträger
- 9: Anschlagkragen
- 10: Verbindungselemente

## Patentansprüche

1. Strukturelement im vorderen Bereich eines Kraftfahrzeuges, das zwischen einem Motorträger (8) und einer Stirnwand (6) des Kraftfahrzeuges angeordnet ist, und das ein Deformationselement (1) aufweist, **dadurch gekennzeichnet, dass** das Deformationselement (1) über eine vordere Einspannung (4) am Motorträger (8) und über eine hintere Einspannung (5) an der Stirnwand (6) befestigt ist, dass die vordere Einspannung (4) über eine obere Schale (2) und über eine untere Schale (3) mit der Stirnwand (6) derart verbunden ist, dass die beiden Schalen (2, 3) miteinander eine geschlossene, trichterförmige Struktur bilden.

2. Strukturelement nach Anspruch 1, wobei das Deformationselement (1) aus einem Faserverbundkunststoff besteht.

3. Strukturelement nach Anspruch 1 oder 2, wobei die hintere Einspannung (5) über lösbare Befestigungselemente (10) mit der Stirnwand (6) verbunden, insbes. verschraubt ist und sich an Lastverteilerplatten (7) abstützt, welche in die Stirnwand (6) integriert sind.

4. Strukturelement nach einem der vorhergehenden Ansprüche, wobei die Stirnwand (6) aus einem Faserverbundmaterial mit einem Schaumkern besteht.

5. Strukturelement nach Anspruch 4, wobei die Lastverteilerplatten (7) zusammen mit den Befestigungselementen (10) für die hintere Einspannung (5) des Deformationselementes (1) in den Schaumkern der Stirnwand (6) integriert sind.

6. Strukturelement nach einem der vorhergehenden Ansprüche, wobei die von den Schalen (2, 3) gebildete trichterförmige Struktur derart mit der Stirnwand (6) verbunden ist, dass sie den Motorträger (8) zumindest in horizontaler und vertikaler Richtung gegenüber der Stirnwand (6) abstützt.

7. Strukturelement nach einem der vorhergehenden Ansprüche, wobei das Deformationselement (1) und die vordere Einspannung (4) über ein leicht lösbares Befestigungselement an dem Motorträger (8) befestigt sind.

8. Strukturelement nach einem der vorhergehenden Ansprüche, wobei zumindest eine der beiden Schalen (2, 3) in zumindest einem Teilbereich derart ausgelegt ist, dass bei einer Belastung, die zu einer Beschädigung des Deformationselementes (1) führt, eine sichtbare Veränderung an der Schale (2, 3) auftritt.

## Claims

1. A structural element in the front region of a motor vehicle, which is arranged between an engine cradle (8) and an end wall (6) of the motor vehicle and which comprises a deformation element (1), **characterised in that** the deformation element (1) is fastened to the engine cradle (8) by means of a front clamp (4), and is fastened to the end wall (6) by means of a rear clamp (5), and **in that** the front clamp (4) is connected to the end wall (6) by means of an upper shell (2) and by means of a lower shell (3) in such a way that the two shells (2, 3) together form a closed, funnel-shaped structure.

2. A structural element according to claim 1, wherein the deformation element (1) consists of a fibre-reinforced plastic.

3. A structural element according to either claim 1 or claim 2, wherein the rear clamp (5) is connected, in particular screwed, to the end wall (6) by means of detachable fasteners (10) and is supported on load-distribution plates (7) which are integrated into the end wall (6).

4. A structural element according to any of the preceding claims, wherein the end wall (6) consists of a fibre-composite material having a foam core.

5. A structural element according to claim 4, wherein the load-distribution plates (7), together with the fasteners (10) for the rear clamp (5) of the deformation element (1), are integrated into the foam core of the end wall (6).

6. A structural element according to any of the preceding claims, wherein the funnel-shaped structure formed by the shells (2, 3) is connected to the end wall (6) in such a way that said structure supports the engine cradle (8) at least in the horizontal and vertical direction with respect to the end wall (6).

7. A structural element according to any of the preceding claims, wherein the deformation element (1) and the front clamp (4) are fastened to the engine cradle (8) by means of an easily detachable fastener.

8. A structural element according to any of the preceding claims, wherein at least one of the two shells (2, 3) is constructed in at least one portion in such a way that, in the case of a load which leads to the deformation element (1) being damaged, a visible change occurs on the shell (2, 3).

## Revendications

1. Elément de structure situé dans la zone avant d'un véhicule qui est monté entre un support du moteur (8) et une paroi frontale (6) du véhicule, et comporte un élément de déformation (1),
**caractérisé en ce que**
l'élément de déformation (1) est fixé par l'intermédiaire d'un élément de serrage avant (4) sur le support du moteur (8) et par l'intermédiaire d'un élément de serrage arrière (5) sur la paroi frontale (6), et l'élément de serrage avant (4) est relié à la paroi frontale (6) par l'intermédiaire d'une coque supérieure (2) et d'une coque inférieure (3) de sorte que les deux coques (2, 3) forment conjointement une structure en forme d'entonnoir fermée.

2. Elément de structure conforme à la revendication 1,
dans lequel l'élément de déformation (1) est réalisé en un matériau composite renforcé par des fibres.

3. Elément de structure conforme à la revendication 1 ou 2,
dans lequel l'élément de serrage arrière (5) est relié à la paroi frontale (6) par l'intermédiaire d'éléments de fixation amovibles (10) et est en particulier vissé sur celle-ci, et s'appuie sur des plaques de répartition de la charge (7) qui sont intégrées dans la paroi frontale (6).

4. Elément de structure conforme à l'une des revendications précédentes,
dans lequel la paroi frontale (6) est réalisée en un matériau composite renforcé par des fibres ayant un noyau en mousse.

5. Elément de structure conforme à la revendication 4,
**caractérisé en ce que**
les plaques de répartition de la charge (7) sont intégrées dans le noyau en mousse de la paroi frontale (6) avec les éléments de fixation (10) de l'élément de serrage arrière (5) de l'élément de déformation (1).

6. Elément de structure conforme à l'une des revendications précédentes,
dans lequel la structure en forme d'entonnoir formée par les coques (2, 3) est reliée à la paroi frontale (6) de sorte qu'elle applique le support du moteur (8) au moins en direction horizontale et en direction verticale contre la paroi frontale (6).

7. Elément de structure conforme à l'une des revendications précédentes,
dans lequel l'élément de déformation (1) et l'élément de serrage avant (4) sont fixés sur le support du moteur (8) par l'intermédiaire d'un élément de fixation facilement amovible.

8. Elément de structure conforme à l'une des revendications précédentes,
dans lequel au moins l'une des deux coques (2, 3) est réalisée dans au moins une zone partielle de sorte qu'en cas de charge, qui provoque un endommagement de l'élément de déformation (1), une modification visible se produise sur les coques (2, 3).
